# EUROPÄISCHE PATENTSCHRIFT

(11) **EP 0 874 165 B1**
(45) Veröffentlichungstag und Bekanntmachung des Hinweises auf die Patenterteilung: **31.07.2002**
(21) Anmeldenummer: 98810328.9
(22) Anmeldetag: 16.04.1998
(51) Int. Cl.: F16B 13/00, F16B 25/10

(54) **Vorrichtung für Wandbefestigungen**
Device for fixation to a wall
Dispositif de fixation murale

(30) Priorität: 25.04.1997 DE 19717420
(43) Veröffentlichungstag der Anmeldung: 28.10.1998
(73) Patentinhaber: MUNGO BEFESTIGUNGSTECHNIK AG, CH-4603 Olten (CH)
(72) Erfinder: Bappert, Adolf, 4616 Kappel (CH)
(74) Vertreter: Quehl, Horst Max, Dipl.-Ing.

(56) Entgegenhaltungen:
- EP-A- 0 501 860
- EP-A- 0 575 295
- DE-A- 4 439 973
- GB-A- 2 275 979
- US-A- 5 529 449

## Beschreibung

Die Erfindung betrifft eine Vorrichtung mit den Merkmalen des Oberbegriffs des Patentanspruchs 1.

Bei bekannten Vorrichtungen dieser Art, z.B. entsprechend der EP-B-0 575 295 dient der Bohrschaft der Aufnahme einer in ihrer Länge angepassten Befestigungsschraube, indem sich die Befestigungsschraube nach Art von Dübelbefestigungen selbstschneidend in Rippen einschneidet, die an der Innenwand des hohlen Bohrschaftes vorgesehen sind. '

Durch die US-A- 5 529 449 ist weiterhin eine ähnliche Vorrichtung bekannt, an deren Flansch ein Befestigungshaken angeformt ist, so dass die innere Bohrung der Vorrichtung nach aussen hin verschlossen ist. Beim Einschrauben muss folglich der Befestigungshaken als Handgriff benutzt werden, so dass ein einfaches, schnelles und achsgerechtes Einschrauben mittels eines z.B. maschinengetriebenen Werkzeuges nicht möglich ist.

Der Erfindung liegt die Aufgabe zugrunde, eine Vorrichtung der genannten Art zu finden, die sich leicht in eine Wand einbringen lässt, die eine feste Verankerung gewährleistet und eine widerstandsfähige und schnelle Befestigung von an der Wand anzubringenden Objekten ermöglicht.

Die Lösung dieser Aufgabe erfolgt aufgrund der kennzeichnenden Merkmale des Patentanspruchs 1.

Im folgenden wird die Erfindung anhand von in den Zeichnungen dargestellten Ausführungsbeispielen näher beschrieben. Es zeigt, in vergrösserter Darstellung:
- Fig.1: eine Seitenansicht einer ersten Ausführungsform einer erfindungsgemässen Vorrichtung mit Gewindezapfen,
- Fig.2: eine Seitenansicht einer zweiten Ausführungsform einer erfindungsgemässen Vorrichtung mit Befestigungshaken,
- Fig.3: einen Axialschnitt der Vorrichtung nach Fig.1 mit ungeschnittener Darstellung der Vorbohrspitze und
- Fig.4: eine Seitenansicht eines Werkzeuges zum Einarbeiten einer Vorrichtung nach Fig.1 oder 2 in eine Wand.

Wie die Darstellungen zeigen, hat die Vorrichtung 1 einen hohlen Bohrschaft 2 mit leicht konischer, äusserer Umfangsfläche 3 und ein äusseres Schneidgewinde 4. Das Schneidgewinde 4 erstreckt sich mit ungefähr drei Gängen über den grösseren Teil der Länge des Bohrschaftes 2 und endet vorn mit wesentlichem Abstand von deren Endkante 6, so dass die Vorrichtung 1 einen schneidgewindefreien, vorderen Führungsbereich 7 hat, durch den sie in einem durch die Vorbohrspitze 8 vorbereiteten Loch geführt wird.

Der Flankenwinkel des äusseren Schneidgewindes 4 ist verhältnismässig spitz und der Steigungswinkel verhältnismässig klein. Ausserdem weist das Schneidgewinde 4 an seinen Flanken kantige Profilierungen 10 auf, so dass sich eine fräserartig verbesserte Schneidwirkung ergibt und Fördermittel für das entstehende Bohrmehl vorhanden sind.

Damit die Vorrichtung 1 ohne vorangehende Benutzung eines Bohrwerkzeuges unmittelbar in eine aus weichem oder porösem Baumaterial bestehende Wand, z.B. eine Gipswand o.dgl. zeitsparend eingebohrt bzw. eingeschraubt werden kann, ohne ein Loch vorbohren zu müssen, ist am vorderen Ende des Hülsenkörpers 2 eine kurze, abgestufte Vorbohrspitze 8 angeformt. Die Abstufung ist durch zwei verschiedene Spitzenwinkel gegeben, mit dem kleineren Spitzenwinkel von z.B. 30° am vordersten Spitzenteil 25 und einem grösseren Spitzenwinkel von z.B. 60° am hinteren Spitzenteil 26. Die Schneidkanten 27 der Vorbohrspitze 8 für drehendes Bohren ergeben sich durch paarweise, mindestens angenähert radial nach innen gerichtete, achsparallele Flächen 28 der massiven Vorbohrspitze 8. Entlang dieser Flächen 28 werden die entstehenden Bohrspäne nach innen zu dem Innenraum 30 des Bohrschaftes 2 hin abgeleitet. Hierzu sind in seiner Wand diametral beidseitig mehrere Oeffnungen 31 bis 35 vorgesehen. Zusätzlich ist die vorbohrspitze 8 mit einer seitlichen Fräserzacke 29 ausgerüstet.

Weiterhin ist die Aussenfläche 3 des Bohrschaftes 2 von einem Fördergewinde 36 umschlossen, durch das Bohrmehl zu den Oeffnungen 32 bis 35 gefördert wird.

Das Schneidgewinde 4 hat beispielsweise einen Aussendurchmesser, der doppelt so gross ist wie derjenige des Bohrschaftes 2, so dass sich trotz der verhältnismässig geringen Länge der Vorrichtung 1 eine gute Verankerung im weichen Baumaterial ergibt. Ausserdem unterstützt dieses Schneidgewinde 4 die Vortriebskraft beim Einbohren 1 in ein Baumaterial. Am hinteren Ende der Schraubhülse 1 ist ein Flansch 37 angeformt, durch den sich die vollständig in eine Wand eingeschraubte Schraubhülse 1 an der Wandoberfläche abstützt.

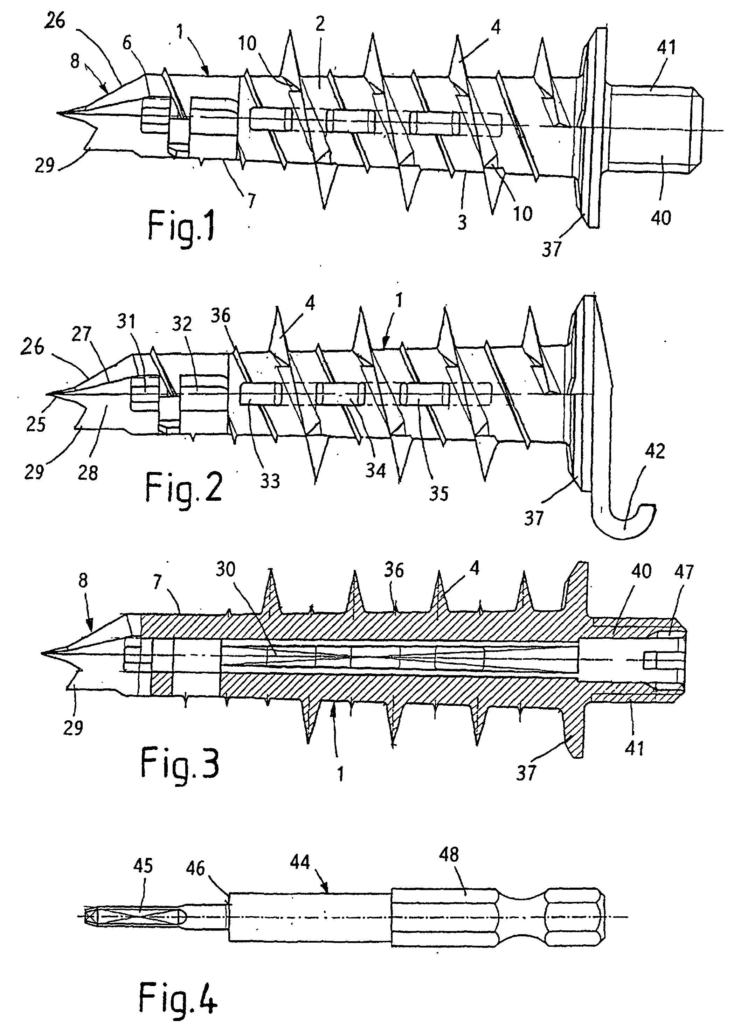

Für die Befestigung von Objekten schliesst sich beim Ausführungsbeispiel nach Fig.1 an den Flansch 37 in axialer Fortsetzung nach aussen ein hohler Gewindezapfen 40 mit einem Aussengewinde 41 an, so dass ein mit einem passenden Innengewinde ausgerüsteter Gegenstand, z.B. eine Schelle zur Aufnahme einer Rohrleitung, unmittelbar aufgeschraubt werden kann. Ein Gegenstand kann jedoch auch mit einem passenden Aufnahmeloch versehen sein, so das er durch Aufstecken sofort in seiner Position an der Wand gesichert ist, um anschliessend mittels einer Schraubenmutter gesichert zu werden.

Beim Ausführungsbeispiel nach Fig.2 ist an dem Flansch 37 aussen ein Haken 42 angeformt, so dass die Vorrichtung 1 zum hängenden Befestigen von Objekten vorgesehen ist.

Zum leichten Einbringen der Vorrichtung 1 in einer Wand z.B. mit Gipsplattenbeschichtung ist ein Werkzeug 44 entsprechend der Darstelung in Fig.4 geeignet. Es passt mit einem vorderen Schaftteil 45 in den hohlen Bohrschaft 2 der Vorrichtung 1 und gewährleistet somit eine achsgerechten Führung beim Einschrauben in eine Wand. Eingriffsmittel für die Herstellung einer Antriebsverbindung zwischen dem Werkzeug 44 und der Vorrichtung 1 sind beispielsweise durch die Ausführung des vorderen Schaftteiles 45 als Vierkantschaft gegeben, indem der Innenraum 30 der Vorrichtung 1 zumindest auf einem Teil seiner Länge einen dazu passenden Vierkantquerschnitt aufweist. Stattdessen oder zusätzlich kann am hinteren Ende 46 des Werkzeuges 44 eine nichtdargestellte schraubendreherartige Eingriffsprofilierung vorgesehen sein, die zum Eingriff in kreuzweise angeordnete Schlitze geeignet ist, die am hinteren Ende des hohlen Gewindezapfens 40 eingeformt sind. Für die Kupplung mit einem von Hand oder motorisch betriebenen Werkzeug hat das Werkzeug 44 an seinem hinteren Ende einen passend profilierten, standardisierten Schafteil 48.

## Patentansprüche

1. Vorrichtung für Befestigungen an Wänden aus Material geringer Festigkeit, insbesondere an Gipswänden, mit einem hohlen Bohrschaft (2), der an einem zur Anlage an der Wandoberfläche bestimmten Flansch (37) endet und dessen Gewinde als einen spitzen Flankenwinkel aufweisendes Schneidgewinde (4) ausgeführt ist und mit einer dem Eingriff eines Drehwerkzeuges dienenden Innenprofilierung (30, 47) zur achsgerechten Führung der Vorrichtung (1) beim Einschrauben, wobei das vordere, spitzauslaufende Ende des Bohrschaftes (2) ein fräserartiges Vorbohrelement (8) bildet, **dadurch gekennzeichnet, dass** am hinteren, hohlen Ende der Vorrichtung (1) angrenzend an den Flansch (37) eine Einrichtung (40,42) für die Befestigung von Objekten an der Wand einstückig angeformt ist.

2. Vorrichtung nach Anspruch 1, **dadurch gekennzeichnet, dass** die Einrichtung zur Befestigung von Objekten aus einem hohlen Zapfen (40) mit Aussengewinde (41) zum Aufschrauben eines Objektes oder einer Schraubenmutter ausgeführt ist.

3. Vorrichtung nach Anspruch 1, **dadurch gekennzeichnet, dass** die Einrichtung zur Befestigung von Objekten als Haken (42) zum Aufhängen ausgeführt ist.

4. Vorrichtung nach einem der Ansprüche 1 bis 3, **dadurch gekennzeichnet, dass** das fräserartige Vorbohrelement (8) abgestuft ist, indem es an einem vorderen Spitzenteil (25) einen kleineren Spitzenwinkel aufweist.

5. Vorrichtung nach einem der Ansprüche 1 bis 4, **dadurch gekennzeichnet, dass** an einer Flanke des vorderen, spitzauslaufenden Ende des Vorbohrelementes (8) eine Fräserzacke (29) vorgesehen ist.

6. Vorrichtung nach einem der Ansprüche 1 bis 5, **gekennzeichnet durch** eine fräserartige Profilierung (10) in den Flanken des Schneidgewindes (4).

7. Vorrichtung nach einem der Ansprüch 4 bis 6, **dadurch gekennzeichnet, dass** in der Wand des hohlen Bohrschaftes (2) mehrere Oeffnungen (31-35) zur Aufnahme von Bohrmehl vorgesehen sind.

8. Werkzeug zum Einbringen einer Vorrichtung nach einem der Ansprüche 1 bis 7 in ein Wandmaterial, **gekennzeichnet durch** einen in den hohlen Bohrschaft (2) passenden vorderen Schaftteil (45) zur achsgerechten Führung der Vorrichtung (1) beim Einschrauben, Eingriffsmitteln für die Herstellung einer Antriebsverbindung mit der Vorrichtung sowie einem hinteren Schaftteil (48) für die Kupplung mit einem von Hand oder motorisch betriebenen Werkzeug.

## Claims

1. A device for fastenings on walls made from a low strength material, particularly to plaster walls, having a hollow drilling shank (2), which terminates at a flange (37) intended for engagement on the wall surface and whose thread is constructed as a cutting thread (4) having an acute angle and with an inner contouring (30, 47) for engagement of a lathe tool, provided for an axially correct guidance on srewing in the front, pointed end of the drilling shank (2) forming a milling cutter-like predrilling element (8), wherein at the rear, hollow end of the device (1), adjacent to the flange (37), is shaped in one piece on the wall a means (40, 42) for the fastening of objects.

2. Device according to claim 1, wherein the means for fastening objects is formed by a hollow journal (40) with external thread (41) for screwing down an object or a lock nut.

3. Device according to claim 1, wherein the means for fastening objects is constructed as a hanging hook (42).

4. Device according to one of the claims 1 to 3, wherein the milling cutter-like predrilling element (8) is stepped, in that it has a smaller point angle at its front bit part (25).

5. Device according to one of the claims 1 to 4, wherein a milling cutter tooth (29) is provided on a side of the front, pointed end of the predrilling element (8).

6. Device according to one of the claims 1 to 5, wherein a milling cutter-like contouring (10) is provided in the sides of the cutting thread (4).

7. Device according to one of the claims 4 to 6, wherein several openings (31 to 35) for receiving drillings are provided in the wall of the hollow drilling shank (2).

8. Tool for introducing a device according to one of the claims 1 to 7 into a wall material, wherein, in the hollow drilling shank (2), is provided a matching, front shaft part (45) for the axially correct guidance of the device (1) when screwing in, engagement means for producing a drive connection with the device and a rear shaft part (48) for coupling with a hand or motor-operated tool.

## Revendications

1. Dispositif pour la fixation sur des parois réalisées en matériaux de faible solidité, en particulier sur des parois en plâtre, comprenant une tige de forage creuse (2) qui se termine par une bride (37) destinée à venir se placer contre la surface de la paroi et dont le filet est réalisé comme filet taraudeur (4) présentant un angle de flanc aigu, ainsi qu'une profilation intérieure (30, 47) qui sert à engager un outil rotatif pour le guidage axial correct du dispositif (1) lors du vissage, l'extrémité avant de la tige de forage (2), qui se termine en pointe, formant un élément de préforage (8) en forme de fraise, **caractérisé en ce qu'**un moyen (40, 42) pour la fixation d'objets au mur est formé d'un seul tenant à l'extrémité arrière creuse du dispositif (1), en position adjacente à la bride (37).

2. Dispositif selon la revendication 1, **caractérisé en ce que** le moyen de fixation d'objets est constitué d'un tourillon creux (40) doté d'un filet extérieur (41) pour le vissage d'un objet ou d'un écrou fileté.

3. Dispositif selon la revendication 1, **caractérisé en ce que** le moyen de fixation d'objets présente la forme d'un crochet de suspension (42).

4. Dispositif selon l'une des revendications 1 à 3, **caractérisé en ce que** l'élément de préforage (8) en forme de fraise présente des gradins par le fait qu'une partie avant (25) de sa pointe présente un plus petit angle de pointe.

5. Dispositif selon l'une des revendications 1 à 4, **caractérisé en ce qu'**une dent de fraisage (29) est prévue sur un flanc de l'extrémité avant de l'élément de préforage (8) qui se termine en pointe.

6. Dispositif selon l'une des revendications 1 à 5, **caractérisé par** une profilation (10) en forme de fraise dans les flancs du filet taraudeur (4).

7. Dispositif selon l'une des revendications 4 à 6, **caractérisé en ce que** plusieurs ouvertures (31 à 35) pour la réception des débris de forage sont prévues dans la paroi de la tige de forage creuse (2).

8. Outil pour l'installation d'un dispositif selon l'une des revendications 1 à 7 dans le matériau d'une paroi, **caractérisé par** une partie avant de tige (45) qui s'adapte dans la tige de forage creuse (2), pour le guidage axial correct du dispositif (1) lors du vissage, par des moyens d'engagement pour la réalisation d'une liaison d'entraînement avec le dispositif ainsi que par une partie arrière de tige (48) pour l'accouplement à un outil entraîné à la main ou par moteur.
